# EUROPÄISCHE PATENTSCHRIFT

(11) **EP 1 869 428 B1**
(45) Veröffentlichungstag und Bekanntmachung des Hinweises auf die Patenterteilung: **25.02.2015**
(21) Anmeldenummer: 06725439.1
(22) Anmeldetag: 30.03.2006
(51) Int. Cl.: G01N 15/06, G01N 27/04

(54) **SENSORELEMENT FÜR PARTIKELSENSOREN UND VERFAHREN ZUM BETRIEB DESSELBEN**
SENSOR ELEMENT FOR PARTICLE SENSORS AND METHOD FOR OPERATING THE SAME
ELEMENT DE CAPTEUR DESTINE A DES CAPTEURS A PARTICULES ET PROCEDE D'UTILISATION

(30) Priorität: 01.04.2005 DE 102005015102; 28.02.2006 DE 102006009066
(43) Veröffentlichungstag der Anmeldung: 26.12.2007
(73) Patentinhaber: ROBERT BOSCH GMBH, 70442 Stuttgart (DE)
(72) Erfinder: GUENSCHEL, Harald, 96161 Gerach (DE); RUNGE, Henrico, 70435 Stuttgart (DE)
(86) Internationale Anmeldenummer: PCT/EP2006/061189
(87) Internationale Veröffentlichungsnummer: WO 2006/103272

(56) Entgegenhaltungen:
- EP-A- 1 215 489
- EP-A- 1 321 764
- WO-A-01/29546
- US-A1- 2003 196 499
- PATENT ABSTRACTS OF JAPAN Bd. 009, Nr. 224 (P-387), 10. September 1985 (1985-09-10) & JP 60 082952 A (HITACHI SEISAKUSHO KK), 11. Mai 1985 (1985-05-11)

## Beschreibung

Die Erfindung geht von einem Sensorelement und einem Verfahren zur Bestimmung von Partikeln in Gasgemischen sowie deren Verwendung gemäß der im Oberbegriff der unabhängigen Ansprüche definierten Art aus.

### Stand der Technik

Um die Funktionstüchtigkeit aktueller in Kraftfahrzeugen eingesetzter Abgasnachbehandlungssysteme zu überprüfen bzw. zu überwachen, werden Sensoren benötigt, mit denen auch im Langzeitbetrieb eine genaue Ermittlung der in einem Verbrennungsabgas vorliegenden Partikelkonzentration ermöglicht werden kann. Darüber hinaus soll mittels derartiger Sensoren eine Beladungsprognose beispielsweise eines in einem Abgassystem vorgesehenen Dieselpartikelfilters ermöglicht werden, um eine hohe Systemsicherheit zu erreichen und dadurch kostengünstigere Filtermaterialien einsetzen zu können.

Aus der DE 10 2005 003118 ist ein Sensor zur Detektion von Partikeln in einem Fluidstrom bekannt, der auf der Basis eines keramischen Mehrlagensubstrats ausgeführt ist. Er umfasst zwei voneinander beabstandete Messelektroden, die dem zu untersuchenden Verbrennungsabgas ausgesetzt sind. Lagert sich zwischen den beiden Messelektroden Ruß ab, so kommt es beim Anlegen einer Spannung an die Messelektroden zu einem Stromfluss zwischen den Messelektroden. Ein schichtförmig ausgeführtes Heizelement ermöglicht es, die Elektroden bzw. deren Umgebung auf thermischem Wege von abgelagerten Rußpartikeln zu befreien. Der Sensor umfasst weiterhin ein Temperaturmesselement, mit dem die Temperatur des Sensors detektiert werden kann. Das Heizelement befindet sich innerhalb des Schichtverbundes des Sensors zwischen dem Temperaturmesselement und den Messelektroden. Nachteilig an diesem Aufbau des Sensors ist, dass zur elektrischen Kontaktierung der Messelektroden, des Temperaturmess- und des Heizelementes mindestens fünf separate elektrische Kontakte vorgesehen sein müssen.

US 2003/0196499 offenbart einem Partikelsensor mit einer Impedanzmesseinrichtung, einem Temperaturmesselement und einem Heizelement.

Aufgabe der vorliegenden Erfindung ist es, ein Sensorelement für Sensoren und ein Verfahren zur Bestimmung der Konzentration von Partikeln in Gasgemischen bereitzustellen, das eine genaue Temperaturregelung gestattet und dennoch einfach zu kontaktieren ist.

### Vorteile der Erfindung

Das Sensorelement bzw. das Verfahren mit den kennzeichnenden Merkmalen der unabhängigen Ansprüche hat den Vorteil, dass die der Erfindung zugrundeliegende Aufgabe in vorteilhafter Weise gelöst wird. Dies beruht insbesondere auf dem einfachen Aufbau des Sensorelementes und auf einer geringen Anzahl benötigter elektrischer Kontakte zur Steuerung des Sensorelementes. Dabei umfasst das Sensorelement mindestens ein dem zu bestimmenden Gas ausgesetztes Messelement, mindestens ein in das Sensorelement integriertes Heizelement und mindestens ein in das Sensorelement integriertes Temperaturmesselement. Dabei ist insbesondere eine Zusammenlegung der elektrischen Kontakte eines der genannten Elemente mit je einem der elektrischen Kontakte der beiden anderen Elemente vorgesehen.

Besonders von Vorteil ist, wenn das Temperaturmesselement einen gemeinsamen elektrischen Kontakt mit dem Heizelement und einen gemeinsamen elektrischen Kontakt mit dem Messelement aufweist, da die Bestimmung der Temperatur großzügigeren Genauigkeitsanforderungen unterliegt und somit kleinere, durch die Zusammenlegung der elektrischen Kontakte bedingte Störungen des von dem Temperaturmesselement generierten Messsignals nicht ins Gewicht fallen.

Weitere vorteilhafte Ausführungsformen des vorliegenden Sensorelementes bzw. Verfahrens zum Betrieb desselben ergeben sich aus den Unteransprüchen.

So ist von Vorteil, wenn das Messelement zwei als ineinander verzahnte Interdigitalelektroden ausgeführte Messelektroden umfasst, zwischen denen ein elektrischer Widerstand bestimmbar ist, da auf diese Weise der elektrische Widerstand bzw. die elektrische Leitfähigkeit großer Oberflächenbereiche unter definierten Bedingungen bestimmt werden kann und somit die Empfindlichkeit und die Güte der Messsignale deutlich verbessert wird.

Weiterhin ist von Vorteil, wenn die Messelektroden in der selben Schichtebene des Sensorelementes angeordnet sind wie das Heizelement und/oder das Temperaturmesselement, da sich der Schichtaufbau des Sensorelementes auf diese Weise entscheidend vereinfachen lässt.

In einer besonders vorteilhaften Ausführungsform der vorliegenden Erfindung ist eine Auswertevorrichtung vorgesehen, die eine Veränderung des zwischen den Messelektroden anliegenden Stromflusses ermittelt und dies als Maß für die Partikelkonzentration ausgibt.

Das Sensorelement bzw. das Verfahren zum Betrieb desselben ist in vorteilhafter Weise geeignet zur Überwachung der Betriebsweise eines Dieselmotors bzw. zur Überprüfung der Funktionstüchtigkeit oder des Beladungszustands eines Partikelfilters.

### Zeichnung

Ausführungsbeispiele des erfindungsgemäßen Sensorelementes sind in der Zeichnung schematisch vereinfacht dargestellt und werden in der nachfolgenden Beschreibung näher erläutert. Dabei zeigt
Figur 1 ein Sensorelement gemäß einem ersten Ausführungsbeispiel in einer Explosionsdarstellung,
Figur 2 ein Sensorelement gemäß einem zweiten Ausführungsbeispiel in einer Explosionsdarstellung,
Figur 3 ein Sensorelement gemäß einem dritten Ausführungsbeispiel in einer Explosionsdarstellung,
Figur 4 ein Sensorelement gemäß einem vierten Ausführungsbeispiel in einer Aufsicht und
Figur 5 ein Sensorelement gemäß einem fünften Ausführungsbeispiel in einer Aufsicht.

### Beschreibung der Ausführungsbeispiele

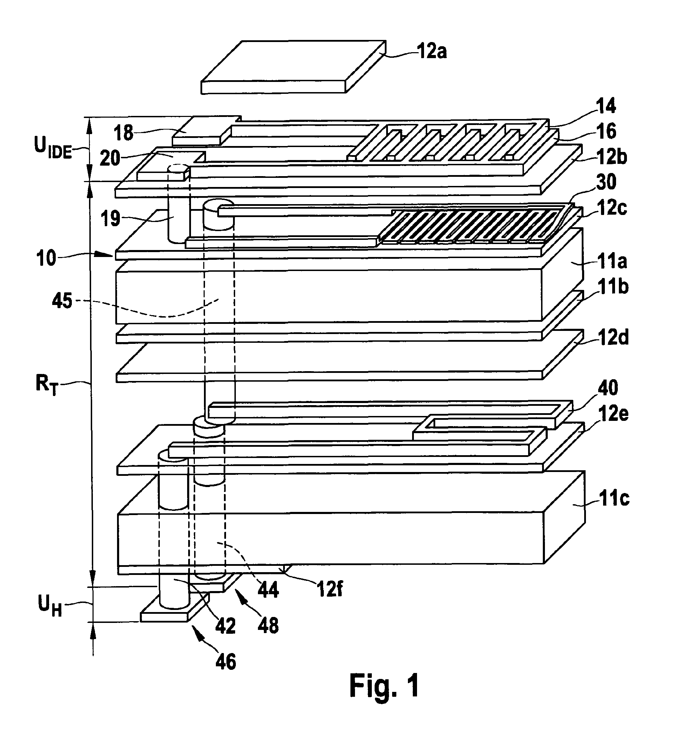

In Figur 1 ist ein prinzipieller Aufbau einer Ausführungsform der vorliegenden Erfindung dargestellt. Mit 10 ist ein keramisches Sensorelement bezeichnet, das der Bestimmung von Partikeln, wie beispielsweise Rußpartikeln, in einem das Sensorelement umgebenden Gasgemisch dient. Das Sensorelement 10 umfasst beispielsweise eine Mehrzahl von sauerstoffionenleitenden Festelektrolytschichten 11a, 11b und 11c. Die Festelektrolytschichten 11a und 11c werden dabei als keramische Folien ausgeführt und bilden einen planaren keramischen Körper. Sie bestehen vorzugsweise aus einem sauerstoffionenleitenden Festelektrolytmaterial, wie beispielsweise mit Y₂O₃ stabilisiertem oder teilstabilisiertem ZrO₂.

Die Festelektrolytschicht 11b wird dagegen mittels Siebdruck eines pastösen keramischen Materials beispielsweise auf der Festelektrolytschicht 11a erzeugt. Als keramische Komponente des pastösen Materials wird dabei bevorzugt dasselbe Festelektrolytmaterial verwendet, aus dem auch die Festelektrolytschichten 11a, 11c bestehen.

Weiterhin weist das Sensorelement 10 beispielsweise eine Vielzahl von elektrisch isolierenden keramischen Schichten 12a, 12b, 12c, 12d, 12e und 12f auf. Die Schichten 12a - 12f werden dabei ebenfalls mittels Siebdruck eines pastösen keramischen Materials beispielsweise auf den Festelektrolytschichten 11a, 11b, 11c erzeugt. Als keramische Komponente des pastösen Materials wird dabei beispielsweise bariumhaltiges Aluminiumoxid verwendet, da dieses auch bei Temperaturwechselbeanspruchungen über einen langen Zeitraum einen weitgehend konstant hohen elektrischen Widerstand aufweist. Alternativ ist auch die Verwendung von Cerdioxid bzw. der Zusatz anderer Erdalkalioxide möglich.

Die integrierte Form des planaren keramischen Körpers des Sensorelementes 10 wird durch Zusammenlaminieren der mit der Festelektrolytschicht 11b und mit Funktionsschichten sowie den Schichten 12a - 12f bedruckten keramischen Folien und anschließendem Sintern der laminierten Struktur in an sich bekannter Weise hergestellt.

Das Sensorelement 10 weist weiterhin ein keramisches Heizelement 40 auf, das in Form einer elektrischen Widerstandsleiterbahn ausgeführt ist und der Aufheizung des Sensorelementes 10 insbesondere auf die Temperatur des zu bestimmenden Gasgemischs bzw. dem Abbrand der auf den Großflächen des Sensorelementes 10 abgelagerten Rußpartikel dient. Die Widerstandsleiterbahn ist vorzugsweise aus einem Cermet-Material ausgerührt; vorzugsweise als Mischung von Platin oder einem Platinmetall mit keramischen Anteilen, wie beispielsweise Aluminiumoxid. Die Widerstandsleiterbahn ist weiterhin vorzugsweise in Form eines Mäanders ausgebildet und weist an beiden Enden Durchkontaktierungen 42, 44 sowie elektrische Kontakte 46, 48 auf. Durch Anlegen einer entsprechenden Heizspannung U_{H} an die Kontakte 46, 48 der Widerstandsleiterbahn kann die Heizleistung des Heizelementes 40 entsprechend reguliert werden.

Auf einer Großfläche des Sensorelementes 10 sind beispielsweise zwei Messelektroden 14, 16 aufgebracht, die vorzugsweise als ineinander verzahnte Interdigitalelektroden ausgebildet sind und ein Messelement bilden. Die Verwendung von Interdigitalelektroden als Messelektroden 14, 16 ermöglicht vorteilhafterweise eine besonders genaue Bestimmung des elektrischen Widerstandes bzw. der elektrischen Leitfähigkeit des sich zwischen den Messelektroden 14, 16 befindenden Oberflächenmaterials. Zur Kontaktierung der Messelektroden 14, 16 sind im Bereich eines dem Gasgemisch abgewandten Endes des Sensorelementes Kontakte 18, 20 vorgesehen. Dabei sind die Zuleitungsbereiche der Elektroden 14, 16 vorzugsweise durch die elektrisch isolierende Schicht 12a gegenüber den Einflüssen eines das Sensorelement 10 umgebenden Gasgemischs abgeschirmt.

Auf der mit den Messelektroden 14, 16 versehenen Großfläche des Sensorelementes 10 kann zusätzlich eine aus Übersichtlichkeitsgründen nicht dargestellte poröse Deck- oder Schutzschicht vorgesehen sein, die die Messelektroden 14, 16 in ihrem ineinander verzahnten Bereich gegenüber einem direkten Kontakt mit dem zu bestimmenden Gasgemisch abschirmt. Dabei ist die Schichtdicke der porösen Schutzschicht vorzugsweise größer als die Schichtdicke der Messelektroden 14, 16. Die poröse Schutzschicht ist vorzugsweise offenporös ausgeführt, wobei die Porengröße so gewählt wird, dass die zu bestimmenden Partikel im Gasgemisch in die Poren der porösen Schutzschicht eindiffundieren können. Die Porengröße der porösen Schutzschicht liegt dabei vorzugsweise in einem Bereich von 2 bis 10 µm. Die poröse Schutzschicht ist aus einem keramischen Material ausgeführt, das vorzugsweise dem Material der Schicht 12a ähnlich ist oder diesem entspricht und kann mittels Siebdruck hergestellt werden. Die Porosität der porösen Schutzschicht kann durch Zusatz von Porenbildnern zu der Siebdruckpaste entsprechend eingestellt werden.

Während des Betriebs des Sensorelementes 10 wird an die Messelektroden 14, 16 eine Spannung U_{IDE} angelegt. Da die Messelektroden 14, 16 auf der Oberfläche der elektrisch isolierenden Schicht 12b angeordnet sind, kommt es zunächst im wesentlichen zu keinem Stromfluss zwischen den Messelektroden 14, 16.

Enthält ein das Sensorelement 10 umströmendes Gasgemisch Partikel, insbesondere Ruß, so lagert sich dieser auf der Oberfläche des Sensorelementes 10 ab. Da Ruß eine bestimmte elektrische Leitfähigkeit aufweist, kommt es bei ausreichender Beladung der Oberfläche des Sensorelementes 10 bzw. der porösen Schutzschicht mit Ruß zu einem ansteigenden Stromfluss zwischen den Messelektroden 14, 16, der mit dem Ausmaß der Beladung korreliert.

Wird nun an die Messelektroden 14, 16 eine vorzugsweise konstante Gleich- oder Wechselspannung angelegt und der zwischen den Messelektroden 14, 16 auftretende Stromfluss ermittelt, so kann aus dem Integral des Stromflusses über der Zeit auf die abgelagerte Partikelmasse bzw. auf den aktuellen Partikelmassenstrom, insbesondere Rußmassenstrom, und auf die Partikelkonzentration im Gasgemisch geschlossen werden. Mit dieser Messmethode wird die Konzentration all derjenigen Partikel in einem Gasgemisch erfasst, die die elektrische Leitfähigkeit des sich zwischen den Messelektroden 14, 16 befindenden keramischen Materials positiv oder negativ beeinflussen.

Eine weitere Möglichkeit besteht darin, den Anstieg des Stromflusses über der Zeit zu ermitteln und aus dem Quotienten aus Stromflussanstieg und Zeit bzw. aus dem Differentialquotienten des Stromflusses nach der Zeit auf die abgelagerte Partikelmasse bzw. auf den aktuellen Partikelmassenstrom, insbesondere Rußmassenstrom, und auf die Partikelkonzentration im Gasgemisch zu schließen. Eine Berechnung der Partikelkonzentration ist auf der Basis der Messwerte möglich, sofern die Strömungsgeschwindigkeit des Gasgemisches bekannt ist. Diese bzw. der Volumenstrom des Gasgemisches kann bspw. mittels eines geeigneten weiteren Sensors bestimmt werden.

Darüber hinaus umfasst das Sensorelement 10 ein Temperaturmesselement 30, das vorzugsweise in Form einer elektrischen Widerstandsleiterbahn ausgeführt ist. Die Widerstandsleiterbahn ist beispielsweise aus einem ähnlichen oder dem selben Material ausgeführt, wie das der Widerstandsleiterbahn des Heizelementes 40. Die Widerstandsleiterbahn des Temperaturmesselementes 30 ist vorzugsweise in Form eines Mäanders ausgeführt, wobei einer der Anschlüsse der Widerstandsleiterbahn vorzugsweise mit dem Kontakt 48 über eine Durchkontaktierung 45 verbunden ist. Ein weiterer elektrischer Anschluss des Temperaturmesselements 30 ist vorzugsweise mit einem der Kontakte 18, 20 über eine weitere Durchkontaktierung 19 leitend verbunden. Durch Anlegen einer entsprechenden Spannung an die Anschlüsse 20, 48 der Widerstandsleiterbahn und durch Bestimmen des elektrischen Widerstandes R_{T} derselben kann auf die Temperatur des Sensorelementes 10 geschlossen werden. Eine alternative bzw. zusätzliche Möglichkeit der Tempraturmessung besteht darin, die per se temperaturabhängige Leitfähigkeit des zwischen der Widerstandsleiterbahn des Temperaturmesselements 30 und den Messelektroden 14, 16 angeordneten keramischen Körpers zu bestimmen und aus dessen Höhe auf die Temperatur des Sensorelementes zu schließen.

Die Zusammenlegung der elektrischen Anschlüsse der Widerstandsleiterbahn mit den Kontakten 20 bzw. 48 kann der Betrieb bzw. die Steuerung des Sensorelementes über nur vier Anschlüsse bzw. Kontaktflächen des Sensorelementes erfolgen; dies vereinfacht den Aufbau des Sensorelementes bzw. der Zuleitungsperipherie beträchtlich.

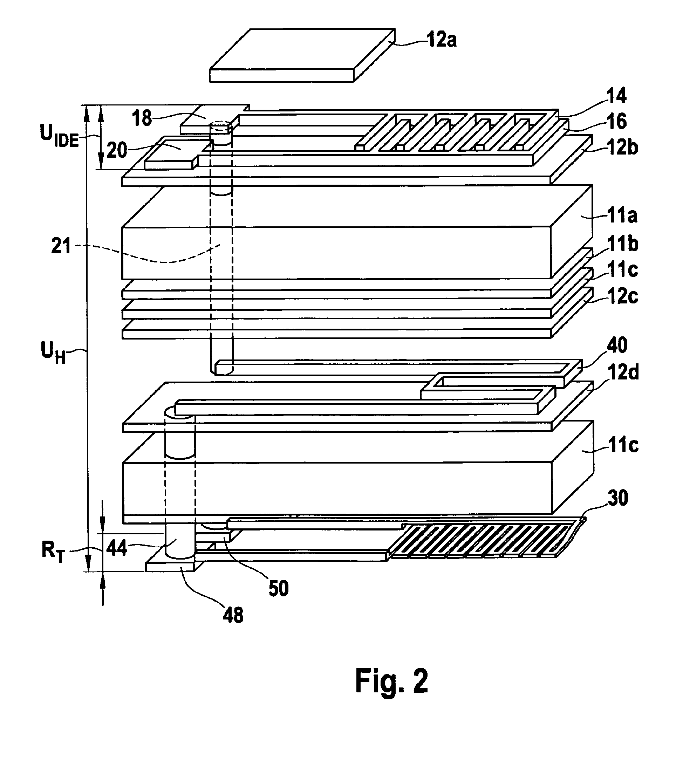

Je nach räumlicher Anordnung der Elemente Messelement 14, 16, Heizelement 40 und Temperaturmesselement 30 innerhalb des Sensorelementes 10 kann es auch vorteilhaft sein, wenn das Messelement 14, 16 einen ersten gemeinsamen elektrischen Anschluss mit dem Heizelement 40 und einen zweiten gemeinsamen Anschluss mit dem Temperaturmesselement 30 aufweist. Alternativ ist es möglich, dass das Heizelement 40 einen ersten gemeinsamen elektrischen Anschluss mit dem Messelement 14, 16 und einen zweiten gemeinsamen Anschluss mit dem Temperaturmesselement 30 aufweist. Eine solche Ausführungsform ist in Figur 2 dargestellt, wobei gleiche Bezugszeichen gleiche Bauteilkomponenten bezeichnen wie in Figur 1.

Bei dem in Figur 2 dargestellten Sensorelement ist das Heizelement 40 räumlich zwischen dem Messelement 14, 16 und dem Temperaturmesselement 30 angeordnet. Dabei ist ein elektrischer Anschluss des Heizelementes 40 über die Durchkontaktierung 33 mit dem Kontakt 48 verbunden, der auch der Kontaktierung des Temperaturmesselementes 30 dient, und ein zweiter elektrischer Anschluss des Heizelementes 40 ist über eine weitere Durchkontaktierung 21 mit dem Kontakt 18 der Messelektrode 14 verbunden. Das Temperaturmesselement 30 umfasst dabei einen weiteren Kontakt 50. Der besondere Vorteil dieser Ausführungsform besteht darin, dass lediglich zwei Durchkontaktierungen benötigt werden, wodurch die Herstellung des Sensorelementes 10 vereinfacht wird.

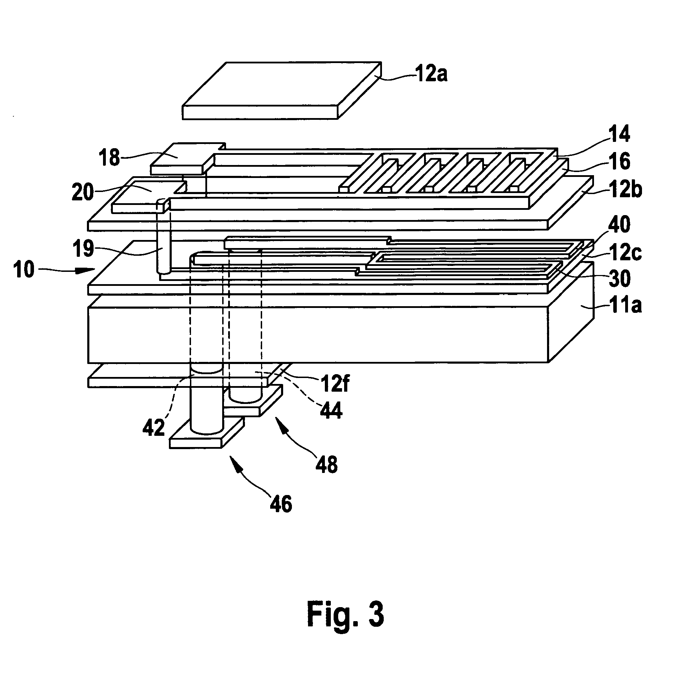

In Figur 3 ist ein Sensorelement gemäß einem dritten Ausführungsbeispiel dargestellt. Dabei bezeichnen weiterhin gleiche Bezugszeichen gleiche Bauteilkomponenten wie in den Figuren 1 und 2.

Das in einer Explosionsdarstellung dargestellte Sensorelement gemäß drittem Ausführungsbeispiel stellt eine weitere Möglichkeit dar, wie eine Anordnung von Messelement 14, 16, Heizelement 40 und Temperaturmesselement 30 erfolgen kann. Dabei sind auf der elektrisch isolierenden Schicht 12c sowohl das Heizelement 40 als auch das Temperaturmesselement 30 aufgebracht. Auf diese Weise kann der Schichtaufbau des Sensorelementes auf wenige keramische Schichten 11a, 12a -12c, 12f reduziert werden.

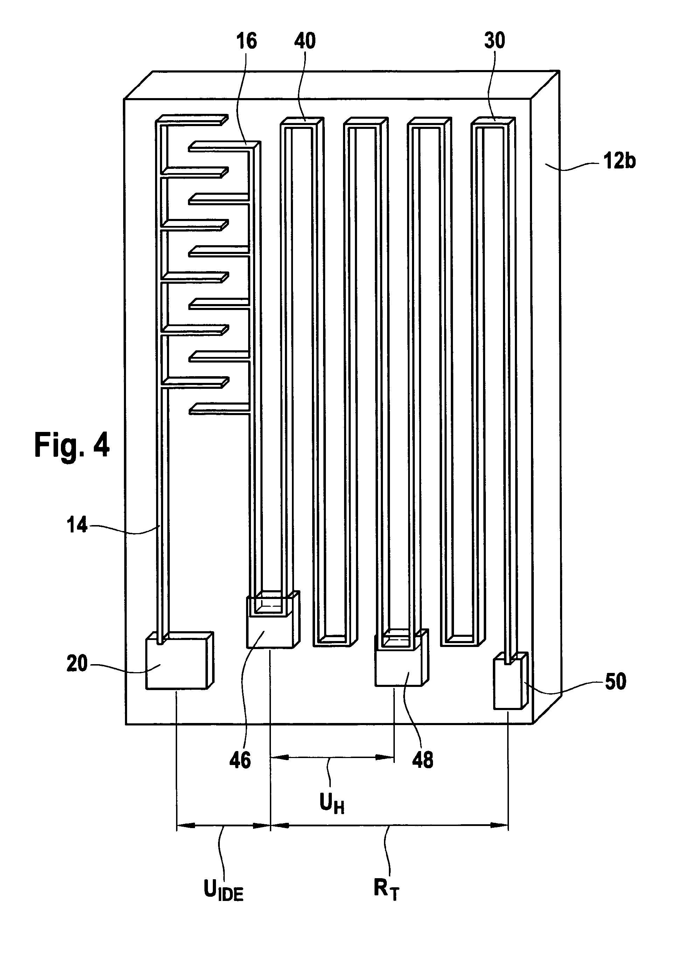

Ein weiteres Ausführungsbeispiel ist in Figur 4 dargestellt. Dabei bezeichnen gleiche Bezugszeichen weiterhin gleiche Bauteilkomponenten wie in den Figuren 1 bis 3.

Bei dem in Figur 4 dargestellten Ausführungsbeispiel sind alle drei Elemente Messelement 14, 16, Temperaturmesselement 30 und Heizelement 40 auf einer gemeinsamen elektrisch isolierenden Schicht 12b aufgebracht. Dabei kann die elektrisch isolierende Schicht 12b beispielsweise als keramische Folie ausgebildet sein. Bei der in Figur 4 dargestellten Anordnung der Elemente weist das Heizelement 40 einen gemeinsamen elektrischen Kontakt 46 mit der Messelektrode 16 auf sowie einen weiteren gemeinsamen elektrischen Kontakt 48 mit dem Temperaturmesselement 30. Das Temperaturmesselement 30 umfasst dabei einen weiteren elektrischen Anschluss 50.

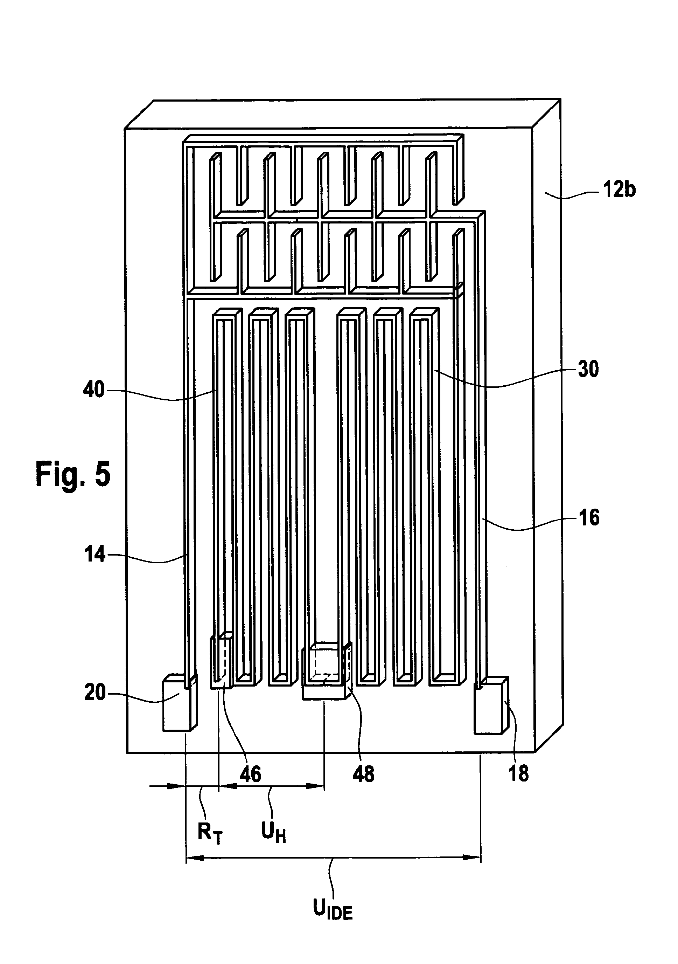

Ein fünftes Ausführungsbeispiel der Erfindung ist in Figur 5 dargestellt. Dabei bezeichnen gleiche Bezugszeichen weiterhin gleiche Bauteilkomponenten wie in den Figuren 1 bis 4.

Bei dem in Figur 5 dargestellten Ausführungsbeispiel sind ebenfalls alle drei Elemente Messelement 14, 16, Temperaturmesselement 30 und Heizelement 40 auf der gemeinsamen elektrisch isolierenden Schicht 12b aufgebracht. Bei der in Figur 5 dargestellten Anordnung der Elemente weist das Temperaturmesselement 30 einen gemeinsamen elektrischen Kontakt 20 mit der Messelektrode 14 auf sowie einen weiteren gemeinsamen elektrischen Kontakt 48 mit dem Heizelement 30.

Die vorliegende Erfindung ist nicht auf die in den Figuren 1 bis 5 dargestellten Ausführungsformen eines Sensorelementes beschränkt, sondern es können zahlreiche Abwandlungen dieses Sensorelementes vorgenommen werden. So ist es beispielsweise möglich, zusätzliche keramische Schichten im Sensorelement vorzusehen oder den Mehrschichtauftbau des Sensorelementes anwendungsbezogen zu vereinfachen, sowie weitere Messelektroden vorzusehen. Auch die Verwendung mehrerer Heiz- und Temperaturmesselemente ist möglich.

Die Anwendung des beschriebenen Sensorelementes ist nicht auf die Bestimmung von Rußpartikeln in Abgasen von Verbrennungsmotoren beschränkt, sondern es kann allgemein zur Bestimmung der Konzentration von Partikeln, die die elektrische Leitfähigkeit eines keramischen Substrats bei Einlagerung verändern, beispielsweise in chemischen Herstellungsprozessen oder Abluftnachbehandlungsanlagen, eingesetzt werden.

## Patentansprüche

1. Sensorelement für Gassensoren zur Bestimmung von Partikeln in Gasgemischen, insbesondere für Rußserisoren, mit mindestens einem dem zu bestimmenden Gas ausgesetzten Messelement mit zwei Messelektroden (14, 16), mindestens einem in das Sensorelement integrierten Heizelement (40) mit einer Widerstandsleiterbahn und mindestens einem in das Sensorelement integrierten Temperaturmesselement (30) mit einer Widerstandsleiterbahn,
dadurch gekenntzeichnet,
dass ein erstes Element der Elemente Messelement (14, 16),
Temperaturmesselement (30) und Heizelement (40) einen ersten gemeinsamen elektrischen Kontakt (20, 46, 48) mitt einem anderen Element der Elemente Messelement (14, 16), Temperaturmesselement (30) und Heizelement (40) aufweist, und dass das erste Element einen weiteren gemeinsamen elektrischen Kontakt (20, 46, 48) mit einem weiteren Element der Elemente Messelement (14, 16), Temperaturmesselement (30) und Heizelement (40) aufweist.

2. Sensorelement nach Anspruch 1, **dadurch gekennzeichnet, dass** das Temperaturmesselement (30) einen gemeinsamen elektrischen Kontakt (46, 48) mit dem Heizelement (40) und einen gemeinsamen elektrischen Kontakt mit dem Messelement (14, 16) aufweist.

3. Sensorelement nach Anspruch 1 oder 2, **dadurch gekennzeichnet, dass** das Messelement (14, 16) eine erste und eine zweite Messelektrode (14, 16) umfasst, mit denen ein elektrischer Widerstand bestimmbar ist.

4. Sensorelement nach einem der Ansprüche 1 bis 3, **dadurch gekennzeichnet, dass** die erste und die zweite Messelektrode (14, 16) als Interdigitalelektrode ausgeführt ist.

5. Sensorelement nach einem der vorhergehenden Ansprüche, **dadurch gekennzeichnet, dass** die erste und die zweite Messelektrode (14, 16) in der selben Schichtebene angeordnet ist wie das Heizelement (40) und/oder das Temperaturmesselement (30).

6. Sensorelement nach einem der Ansprüche 1 bis 4, **dadurch gekennzeichnet, dass** die erste und die zweite Messelektrode (14, 16) auf einem elektrisch isolierenden Substrat (12b) angeordnet sind, wobei das elektrisch isolierende Substrat Aluminiumoxid und/oder Erdalkalioxide enthält.

7. Sensorelement nach einem der vorhergehenden Ansprüche, **dadurch gekennzeichnet, dass** eine Auswertevorrichtung vorgesehen ist, die eine Veränderung des zwischen den Messelektroden (14, 16) anliegenden Stromflusses und/oder Widerstandes ermittelt und dies als Maß für die Partikelkonzentration oder den Partikelmassenstrom ausgibt.

8. Verfahren zur Bestimmung von Partikeln in Gasgemischen, insbesondere von Ruß in Abgasen von Verbrennungsmotoren, mittels eines Sensorelementes nach einem der vorhergehenden Ansprüchen, wobei an mindestens zwei Messelektroden (14, 16) eine Spannung angelegt wird und der sich zwischen den Messelektroden (14, 16) einstellende Stromfluss oder elektrische Widerstand bestimmt wird und als Maß für die Partikelkonzentration oder den Partikelmassenstrom ausgegeben wird.

9. Verfahren nach Anspruch 8, **dadurch gekennzeichnet, dass** eine Regenerierung des Sensorelementes eingeleitet wird, sobald der sich zwischen den Messelektroden (14, 16) einstellende Stromfluss einen vorbestimmten Wert überschreitet und/oder für einen vorbestimmten Zeitraum einen konstanten Wert annimmt.

10. Verwendung eines Sensorelementes nach einem der Ansprüche 1 bis 7 oder eines Verfahrens nach einem der Ansprüche 8 oder 9 zur Überwachung der Betriebsweise eines Dieselmotors oder der Funktionstüchtigkeit und/oder des Beladungszustands eines Partikelfilters.

## Claims

1. Sensor element for gas sensors for determining particles in gas mixtures, in particular for soot sensors, having at least one measuring element which is exposed to the gas which is to be determined and has two measuring electrodes (14, 16), at least one heating element (40) which is integrated into the sensor element and has a resistance conductor track, and at least one temperature measuring element (30) which is integrated into the sensor element and has a resistance conductor track, **characterized in that** a first element from amongst the elements measuring element (14, 16), temperature measuring element (30) and heating element (40) has a first common electrical contact (20, 46, 48) with another element from amongst the elements measuring element (14, 16), temperature measuring element (30) and heating element (40), and **in that** the first element has a further common electrical contact (20, 46, 48) with a further element from amongst the elements measuring element (14, 16), temperature measuring element (30) and heating element (40).

2. Sensor element according to Claim 1, **characterized in that** the temperature measuring element (30) has a common electrical contact (46, 48) with the heating element (40) and a common electrical contact with the measuring element (14, 16).

3. Sensor element according to Claim 1 or 2, **characterized in that** the measuring element (14, 16) comprises a first and a second measuring electrode (14, 16), it being possible to determine an electrical resistance using the said first and the said second measuring electrode.

4. Sensor element according to one of Claims 1 to 3, **characterized in that** the first and the second measuring electrode (14, 16) are designed as interdigital electrodes.

5. Sensor element according to one of the preceding claims, **characterized in that** the first and the second measuring electrode (14, 16) are arranged in the same layer plane as the heating element (40) and/or the temperature measuring element (30).

6. Sensor element according to one of Claims 1 to 4, **characterized in that** the first and the second measuring electrode (14, 16) are arranged on an electrically insulating substrate (12b), wherein the electrically insulating substrate contains aluminium oxide and/or alkaline earth oxides.

7. Sensor element according to one of the preceding claims, **characterized in that** an evaluation apparatus is provided, the said evaluation apparatus ascertaining a variation in the current flow and/or resistance which is present between the measuring electrodes (14, 16), and outputs this as a measure of the particle concentration or the particle mass flow.

8. Method for determining particles in gas mixtures, in particular of soot in exhaust gases from internal combustion engines, by means of a sensor element according to one of the preceding claims, wherein a voltage is applied to at least two measuring electrodes (14, 16) and the current flow or electrical resistance which is established between the measuring electrodes (14, 16) is determined and is output as a measure of the particle concentration or the particle mass flow.

9. Method according to Claim 8, **characterized in that** regeneration of the sensor element is initiated as soon as the current flow which is established between the measuring electrodes (14, 16) exceeds a predetermined value and/or assumes a constant value for a predetermined period of time.

10. Use of a sensor element according to one of Claims 1 to 7 or of a method according to one of Claims 8 and 9 for monitoring the manner of operation of a diesel engine or the operational reliability and/or the loading state of a particle filter.

## Revendications

1. Élément de détection pour détecteurs de gaz destiné à déterminer des particules dans des mélanges gazeux, notamment pour détecteurs de suie, comprenant au moins un élément de mesure muni de deux électrodes de mesure (14, 16) exposé au gaz à déterminer, au moins un élément chauffant (40) muni d'une piste conductrice résistive intégré dans l'élément de détection et au moins un élément de mesure de température (30) muni d'une piste conductrice résistive intégré dans l'élément de détection,
**caractérisé en ce**
**qu'**un premier élément des éléments élément de mesure (14, 16), élément de mesure de température (30) et élément chauffant (40) possède un premier contact électrique commun (20, 46, 48) avec un autre élément des éléments élément de mesure (14, 16), élément de mesure de température (30) et élément chauffant (40), et en ce que le premier élément possède un contact électrique commun (20, 46, 48) supplémentaire avec un élément supplémentaire des éléments élément de mesure (14, 16), élément de mesure de température (30) et élément chauffant (40).

2. Élément de détection selon la revendication 1, **caractérisé en ce que** l'élément de mesure de température (30) possède un contact électrique commun (46, 48) avec l'élément chauffant (40) et un contact électrique commun avec l'élément de mesure (14, 16).

3. Élément de détection selon la revendication 1 ou 2, **caractérisé en ce que** l'élément de mesure (14, 16) comprend une première et une deuxième électrode de mesure (14, 16) avec lesquelles peut être déterminée une résistance électrique.

4. Élément de détection selon l'une des revendications 1 à 3, **caractérisé en ce que** la première et la deuxième électrode de mesure (14, 16) sont réalisées sous la forme d'une électrode interdigitée.

5. Élément de détection selon l'une des revendications précédentes, **caractérisé en ce que** la première et la deuxième électrode de mesure (14, 16) sont disposées dans le même plan de stratification que l'élément chauffant (40) et/ou l'élément de mesure de température (30).

6. Élément de détection selon l'une des revendications 1 à 4, **caractérisé en ce que** la première et la deuxième électrode de mesure (14, 16) sont disposées sur un substrat (12b) électriquement isolant, le substrat électriquement isolant contenant de l'oxyde d'aluminium et/ou des oxydes alcalinoterreux.

7. Élément de détection selon l'une des revendications précédentes, **caractérisé en ce qu'**il est prévu un dispositif d'interprétation, lequel détermine une modification du flux de courant et/ou de la résistance présent(e) entre les électrodes de mesure (14, 16) et délivre celle-ci en tant que mesure de la concentration de particules ou du débit massique de particules.

8. Procédé de détermination de particules dans des mélanges gazeux, notamment de suie dans les gaz d'échappement de moteurs à combustion interne, à l'aide d'un élément de détection selon l'une des revendications précédentes, une tension étant appliquée à au moins deux électrodes de mesure (14, 16) et le flux de courant ou la résistance électrique qui s'établit entre les électrodes de mesure (14, 16) étant déterminé(e) et délivré(e) en tant que mesure de la concentration de particules ou du débit massique de particules.

9. Procédé selon la revendication 8, **caractérisé en ce qu'**une régénération de l'élément de détection est initiée dès que le flux de courant qui s'établit entre les électrodes de mesure (14, 16) dépasse une valeur prédéfinie et/ou adopte une valeur constante pendant une période prédéfinie.

10. Utilisation d'un élément de détection selon l'une des revendications 1 à 7 ou d'un procédé selon l'une des revendications 8 ou 9 pour surveiller le mode de fonctionnement d'un moteur diesel ou l'aptitude au fonctionnement et/ou l'état de charge d'un filtre à particules.
